# EUROPEAN PATENT SPECIFICATION

(11) **EP 1 055 368 B1**
(45) Date of publication and mention of the grant of the patent: **18.12.2002**
(21) Application number: 00650059.9
(22) Date of filing: 29.05.2000
(51) Int. Cl.: A22B 5/08, A01K 13/00, A22B 5/10, A22B 5/00

(54) **Improvements in and relating to hide cleaning**
Verbesserte Reinigung von Häuten
Nettoyage amélioré des peaux

(30) Priority: 28.05.1999 IE 990442
(43) Date of publication of application: 29.11.2000
(73) Proprietor: Cashman, William John, Glounthaune, County Cork (IE)
(72) Inventor: Cashman, William John, Glounthaune, County Cork (IE); Cashman, Liam Valentine, Glanmire, County Cork (IE)

(56) References cited:
- EP-A- 0 240 393
- EP-A- 0 679 335
- BE-A- 485 346
- CH-A- 271 044
- CH-A- 384 393
- DE-C- 814 073
- FR-A- 474 101
- US-A- 3 495 574

## Description

### Introduction

The present invention relates to the slaughtering of animals and in particular to the cleaning of animal hides particularly cattle during the slaughtering operation. The invention is directed to the provision of an animal hide cleaner having mechanical means for removing dirt from the hides of animals, particularly cattle.

Animal hide cleaners are known from e.g. documents DE-C-814073, BE-A-485346 and EP-A-240393.

One of the major problems being experienced by abattoir operators is the increasingly high H.A.C.C.P. standards being imposed on them. One of the greatest causes of contamination in abattoirs is the actual dirt and in particular the faeces carried on animal hides.

The cleanliness of animals is graded from Grade I which is the cleanest to Grade V which is the dirtiest. Animals which would be graded as Grade III or over all have to be clipped prior to slaughtering which clipping is not alone time consuming and can be hazardous to the person clipping or to the animal who is very frightened by it, is also is a costly procedure, at the present moment costing somewhat in the order of IR£8.00 per head of cattle. While a system of power washing of cattle is followed in most slaughter houses, it should be appreciated that with Grade III, IV and V cattle the pre-washing can exacerbate the problem by wetting the hide.

After the cattle have been slaughtered, before the hides are removed, it is essential that they are clean before the slaughtered cattle progress any further through the slaughter house. As the automation of slaughter houses becomes more prevalent and the sophistication of the equipment becomes more widespread, the problems encountered by having hides which are not sufficiently cleaned becomes all the more important. Indeed, as the hygiene requirements become more stringent, the problems of dirty hides which are probably the greatest form of contamination within abattoirs becomes all the more important. Since it is always possible to provide, at least at preset times, clean abattoirs as they are cleaned on a regular basis and sterilised after preset times. However, no matter how sterile and clean the abattoir is when slaughtering commences, if the actual product being progressed through the abattoir, namely, the cattle, are themselves dirty and a source of disease, then almost nothing can be done to improve the prevention of disease and infection.

It has thus become apparent that what must be done is to provide as clean as possible animals, firstly before they enter the slaughter house and then to ensure that after the animals have been slaughtered, the most efficient cleaning possible of the hides is carried out. It is not sufficient to provide relatively clean cattle at the gates of the slaughter house but it is essential that the cattle, when they have been slaughtered, are cleaned down sufficiently that when the hides are opened, there is little or no risk of contamination of the meat from the hides.

A further problem that has exacerbated the situation is the fact that more and more animals are being intensively reared. Animals are in much closer contact and so tend to be dirtier than animals reared less intensively.

The present invention is directed towards overcoming the risk of contamination of meat by, in particular, faecal matter on the hide.

### Statements of Invention

According to the invention, there is provided an animal hide cleaner cleaning having mechanical means for removing dirt from the hide according to claim 1.

The advantage of this is that the hide will be abraded and indeed a considerable amount of animal hair will be removed. Because of the suction exerted, it will be pulled away from the hide and will not cause contamination of the surrounding area of the slaughter house.

In one embodiment of the invention, the cleaner includes a water jet sited adjacent the suction mouth for connection to a water source.

Many forms of abrading means may be used such as a rotatable shaft carrying radially arranged blades which may be pivotally mounted on the shaft for limited pivotal movement. It has been found that four blades substantially equispaced around the shaft are particularly useful. It will be appreciated that various other abrading means could be used such as a rotatable shaft carrying flails or indeed the abrading means could be a rotatable cylinder formed from alternate abrading surfaces and upstanding bristles.

It is also envisaged that the abrading means could effectively be a sander carrying an abrading cloth. When a sander is provided, a particularly suitable form comprises a conveyor including:-
a driven head drum projecting proud of the suction mouth;
a tail drum mounted within the casing; and
a conveyor belt having an outer abrasive surface.

In this latter embodiment, the abrasive surface may carry upstanding blades and indeed there may be provided a scraper blade within the casing for removal of dirt carried by the conveyor belt into the interior of the casing.

While in all the embodiments described above, it has been suggested that the outlet would be simply connected to a suction device, it will be appreciated that the cleaner could itself include a suction device.

### Detailed Description of the Invention

The invention will be more clearly understood from the following description of some embodiments thereof, given by way of example only, with reference to the accompanying drawings, in which:-
Fig. 1 is a perspective view of a cleaner according to the invention in a partially open position,
Fig. 2 is a side view of the cleaner in the closed position,
Fig. 3 is a side view of the cleaner in the open or working position,
Fig. 4 is a plan view of the cleaner,
Fig. 5 is a typical sectional view of the cleaner as illustrated in Fig. 3,
Fig. 6 is a perspective view of an abrading means used in the cleaner,
Fig. 7 is a perspective view of another abrading means used in a cleaner according to the invention,
Fig. 8 is a sectional view similar to Fig. 5 of an alternative construction of cleaner according to the invention,
Fig. 9 is an end view of an alternative construction of abrading means according to the invention,
Fig. 10 is an end view of a further abrading means according to the invention, and
Fig. 11 is a sectional view of a still further construction of cleaner according to the invention.

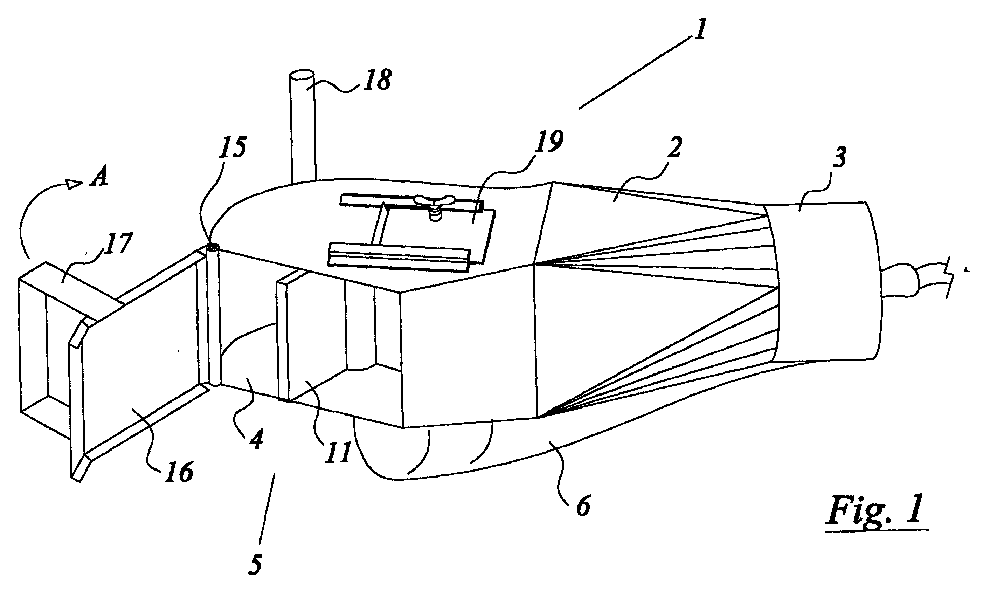

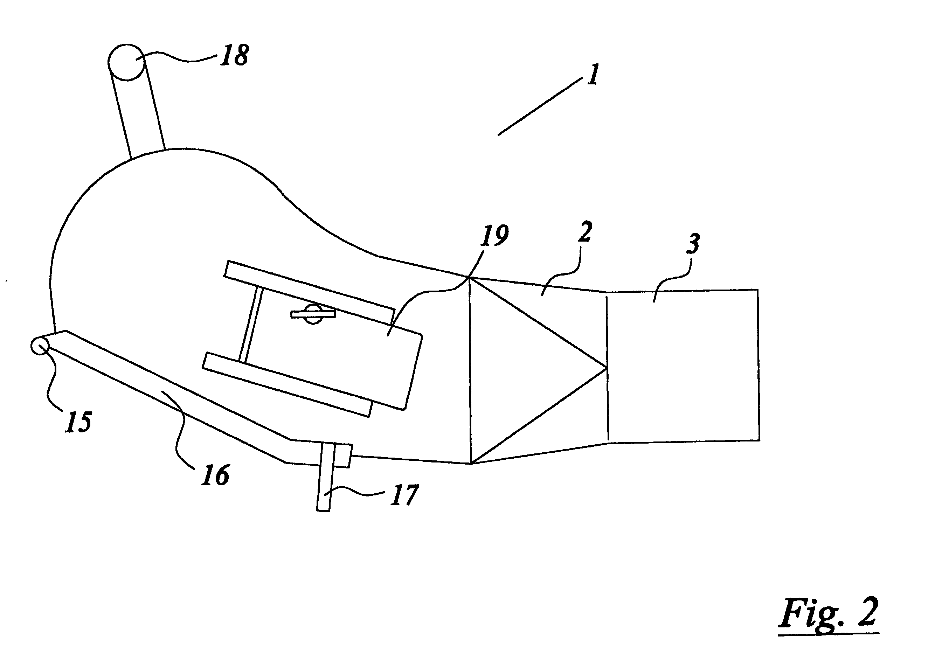

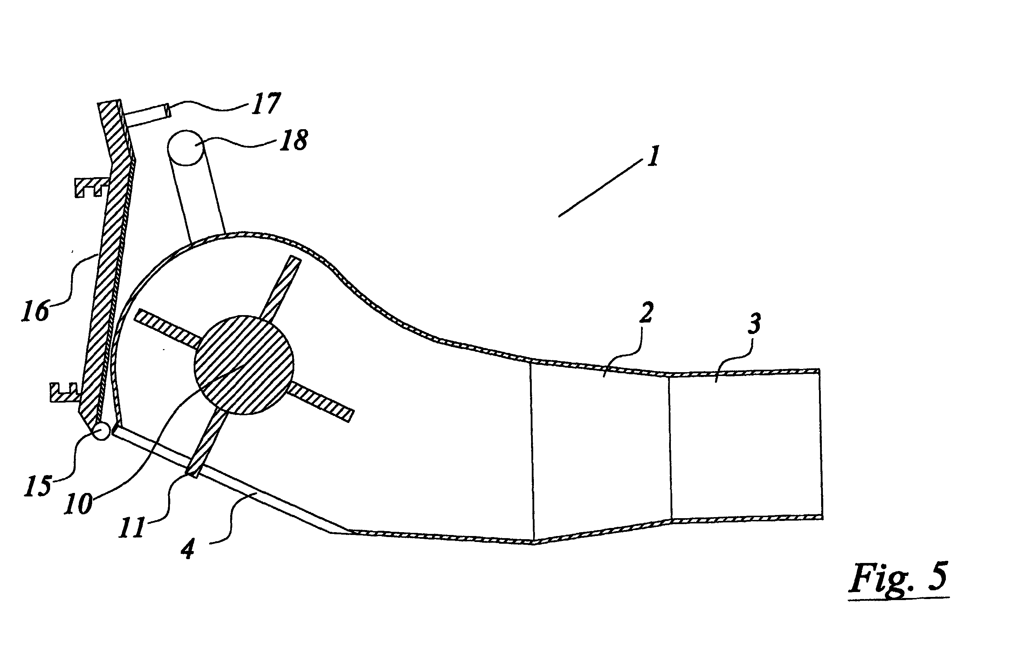

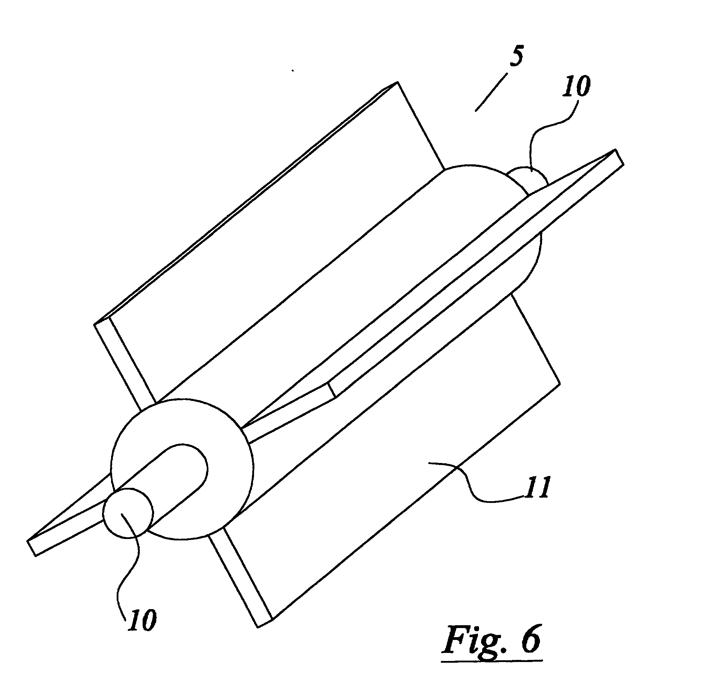

Referring to the drawings and initially to Figs. 1 to 6 thereof, there is provided an animal hide cleaner, indicated generally by the reference numeral 1. The animal hide cleaner 1 comprises an enclosed casing 2 having an outlet 3, an inlet suction mouth 4, hide abrading means indicated generally by the reference numeral 5, housed within the casing 2, and a drive motor 6 for the hide abrading means 5. The hide abrading means 5 comprises a shaft 10 having rigidly mounted thereon four radially arranged blades 11 fast on the shaft 10. The blades 11 are equispaced around the shaft 10 (see Figs. 5 and 6).

Mounted across the inlet suction mouth 4 on a hinge 15 is a blade cover 16 having a handle 17. A further support handle 18 is provided as is an inspection cover 19.

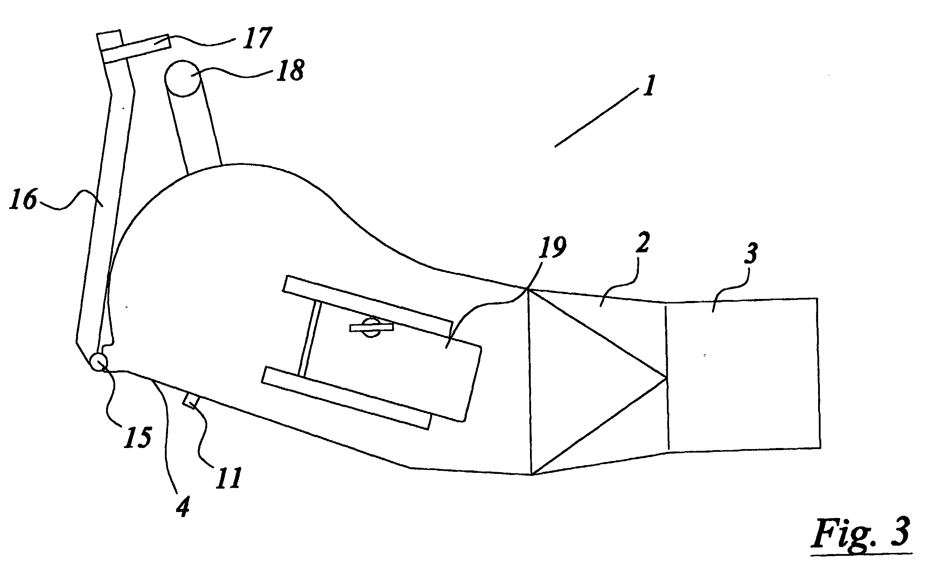

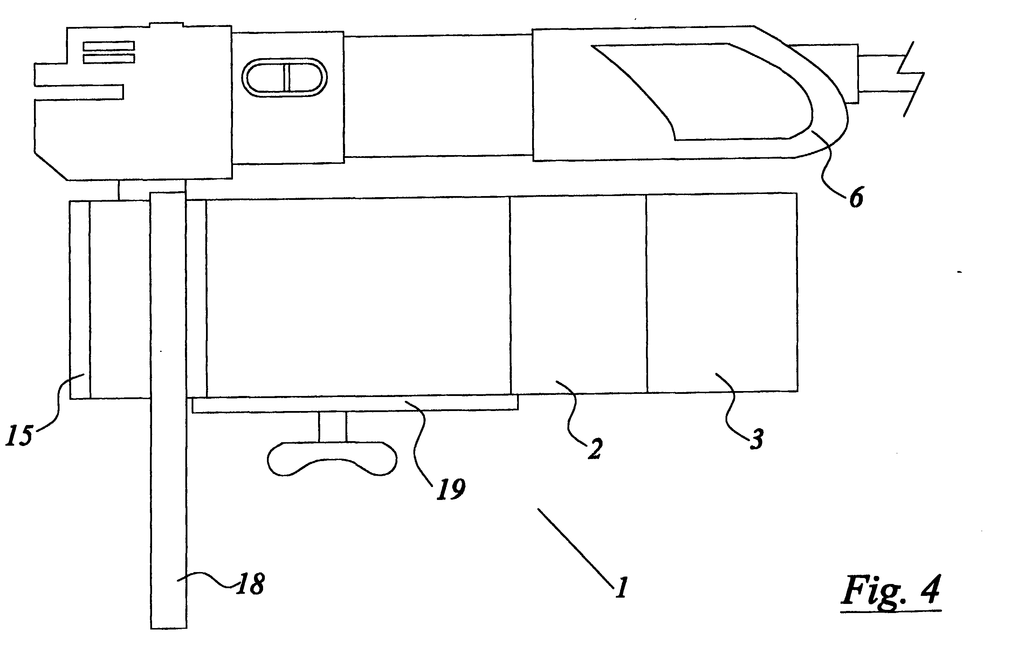

In use, the outlet 3 is connected to a suitable suction device such as vacuum line in a factory or a separate vacuum device effectively the same as a conventional industrial vacuum cleaner. When the animal has been slaughtered, the animal hide cleaner is opened by pivoting the blade cover 16 by the handle 17 in the direction of the arrow A to lie in the position illustrated in Figs. 3 and 4. Then the drive motor 6 is operated and the abrading means 5, in this case, the rotatable shaft 10 carrying the blades 11, is rotated and the rotating blades 11 are offered up against the hide and the hide is scraped and abraded by the blades 11. Any debris removed by the blades 11 is delivered back into the casing 2 and sucked away through the outlet 3.

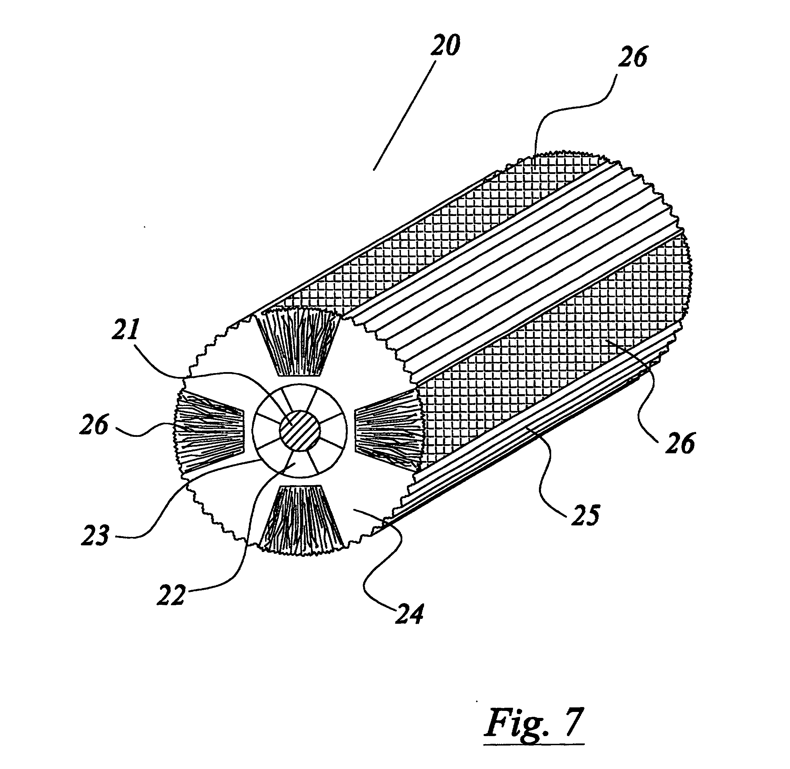

Referring now to Fig. 7, there is illustrated an alternative construction of hide abrading means, indicated generally by the reference numeral 20, which hide abrading means comprises what is effectively a rotatable cylinder comprising a shaft 21 carrying, by means of spokes 22, a hollow cylinder 23. The hollow cylinder 23 has solid projecting portions 24 mounted thereon which in turn have abrading surfaces 25. Alternating with the solid portions 24 are recesses mounting upstanding bristles 26. Effectively, the hide abrading means 20 is a rotatable cylinder having alternate abrading surfaces and upstanding bristles. The hide abrading means 20 will operate in exactly the same way as the hide abrading means 5.

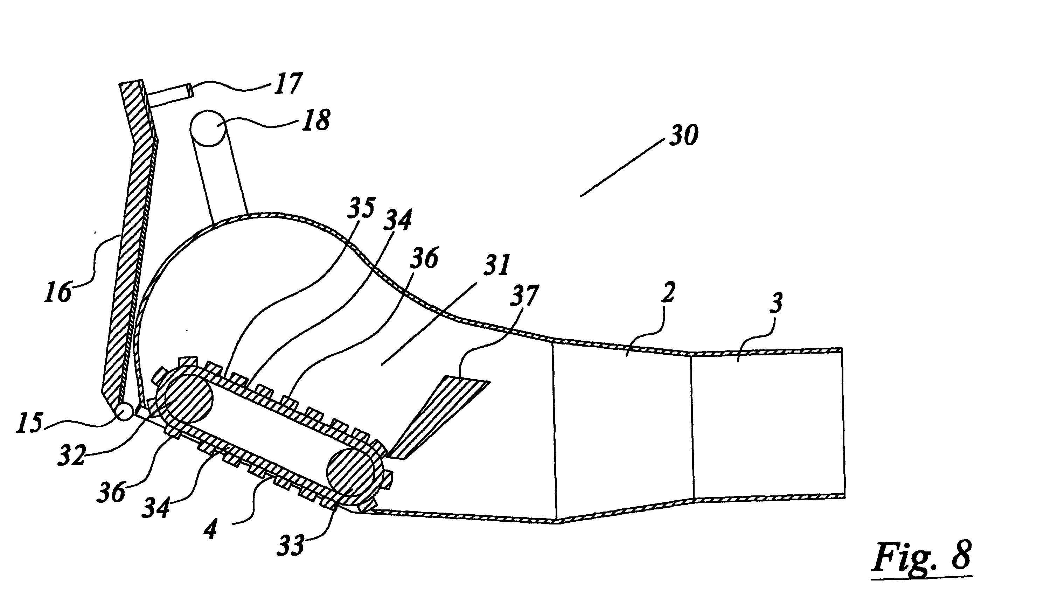

Referring now to Fig. 8, there is illustrated an alternative construction of animal hide cleaner, indicated generally by the reference numeral 30, in which parts similar to those described with reference to the previous drawings, are identified by the same reference numerals. In this embodiment, there is provided a hide abrading means, indicated generally by the reference numeral 31, which hide abrading means is effectively a sander. The sander is in the form of a conveyor including a driven head drum 32 extending outside the inlet suction mouth 4 and an idler tail drum 33. The head drum 32 and tail drum 33 carry a conveyor belt 34 having an outer abrasive surface 35, in this case, carrying upstanding blades 36. It will be noted that the tail drum 33 and a scraper blade 37 are firmly housed within the casing 2.

Again, the animal hide cleaner 30 will operate in exactly the same way as the animal hide cleaner 1 described with reference to the previous drawings.

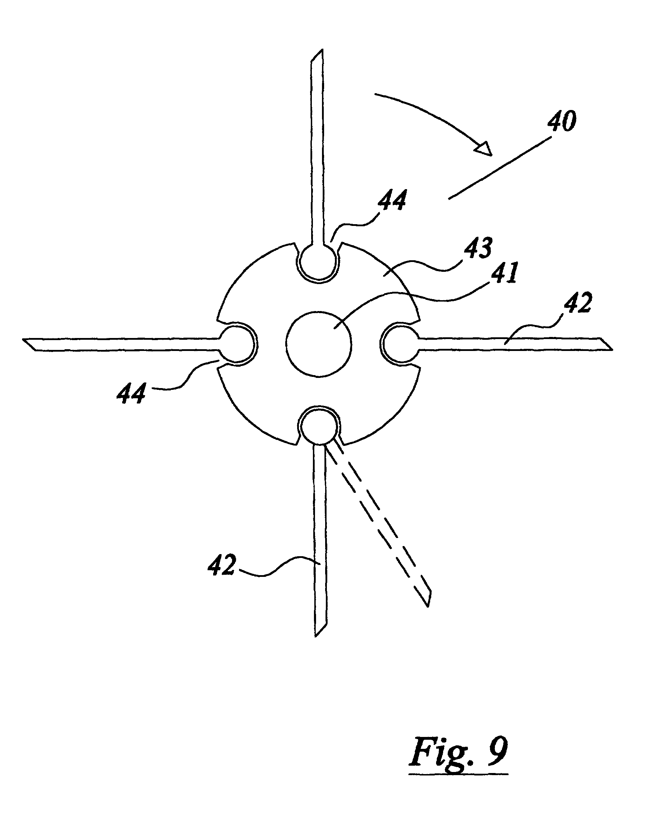

Referring now to Fig. 9, there is illustrated a still further construction of hide abrading means, indicated generally by the reference numeral 40. In this embodiment, the hide abrading means 40 comprises a shaft 41 carrying blades 42, which blades 42 are mounted on the shaft 41 by a drum 43 having sockets 44 for reception of blades 42. The sockets 44 have enlarged mouths to allow limited pivotal movement of the blades therein as can be seen by the interrupted lines in Fig. 9. The advantage of this is that if the blades 42 meet too great an obstruction by an animal hide such as too great a pressure being exerted or an obstruction caused by the anatomy of the animal, the blades 42 will pivot out of the way rather than cause the blades 42 to jam on the hide and possibly cut into the hide.

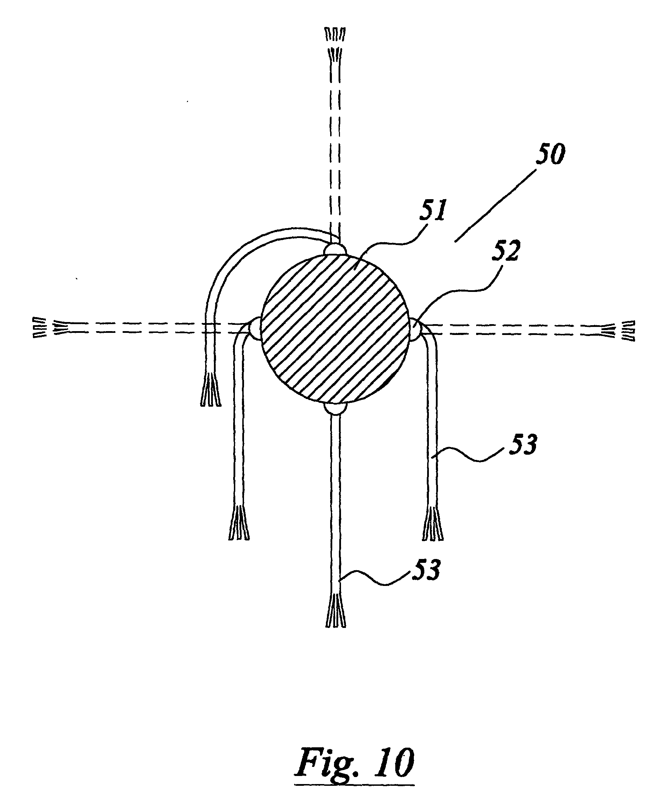

Referring now to Fig. 10, there is illustrated a still further construction of hide abrading means, indicated generally by the reference numeral 50, which hide abrading means 50 comprises a shaft 51 mounting, by means of eyes 52, flexible flails 53. The flails 53 will assume the position illustrated by the interrupted lines when the shaft 51 is rotating. Again, the operation of the hide abrading means 50 is similar to that of the previously described hide abrading means.

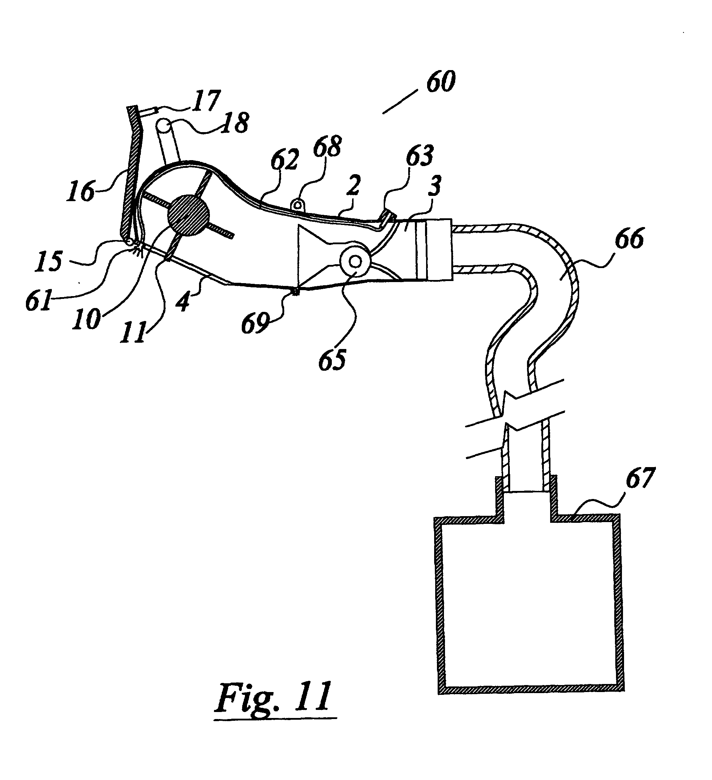

Referring to Fig. 11, there is illustrated a still further construction of animal hide cleaner, indicated generally by the reference numeral 60, in which parts similar to those described with reference to the previous drawings are identified by the same reference numerals. In this embodiment, there is mounted, within the casing 2, a water jet 61 connected by a pipe 62 to a water inlet connector 63 of conventional construction. There is mounted within the casing 2 a suction fan 65 which is mounted adjacent the outlet 3, which outlet 3 is connected by a flexible pipe 66 to a container 67. The suction fan 65 is a suitable suction device. The casing 2 is a two part casing connected by a hinge 68 and catch 69 to facilitate cleaning.

In use, the water jet 61 can be used to further ensure that the hide is clean. Any surplus water will be sucked by the suction fan 65 in through the inlet suction mouth 4 back into the outlet 3 and then down through the pipe 66 to the container 67.

It will be appreciated that the particular construction of abrading means may not be that important although obviously some of the constructions described above are considered to be particularly suitable. What is important is that the abrading means is provided in a housing, which housing has effectively connected thereto, a source of suction which ensures that all debris, dirt, faeces and the like, is quickly removed from the hide and is removed from the hide safely, not going into the surrounding areas. It has been found in practice, that hides cleaned in accordance with the present invention have been particularly clean.

It will be appreciated that while the construction of hide abrading means described above which is simply, in effect, a paddle wheel, is a simple effective device, many other constructions of abrading means may be used. In use, it has been found that this particular paddle wheel construction removes contaminate and some hair from the hide as it revolves. Again, in respect of the blades, the angle of attachment to the shaft and the length and number of these blades will all depend on the speed at which the shaft is driven. Similarly, the blades may be sharpened or otherwise shaped to improve the efficiency.

It will be appreciated that because there is a vacuum and suction applied, there will be air moving rapidly across the hide through the suction mouth into the casing. This airflow will also contribute to drying the hide and even if water is delivered by the cleaner onto the hide, that water will be quickly dried off. Thus, if, for example, no water was used with the cleaner according to the present invention and the hide of the animal after being slaughtered is still wet, the air rushing past into the suction mouth will quickly dry the hide. This current of air will ensure that there is a clean environment in the vacinity of the operation.

Obviously, how the waste material is treated and separated after extraction is not part of the present invention but it will be appreciated that this can be readily easily done.

The present invention is very much directed to improving hygiene during the slaughtering of animals and in particular, the slaughtering of cattle.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described but may be varied in both construction and detail with the scope of the claims.

## Claims

1. An animal hide cleaner (1, 30, 60) having mechanical means for removing dirt from the hide comprising
an enclosed casing (2);
an outlet (3) for connection to a suction device;
an inlet suction mouth (4); and
a hide abrading means (5, 20, 31, 40 and 50) located adjacent the suction mouth (4) for contact with an animal hide, **characterised in that** it comprises a blade cover (16) hingedly mounted across the inlet suction mouth (4).

2. A animal hide cleaner as claimed in claim 1, in which the cleaner (60) includes a water jet (61) sited adjacent the suction mouth (4) for connection to a water source.

3. An animal hide cleaner as claimed in claim 1 or 2, in which the abrading means (5, 40) is a rotatable shaft (10, 41) carrying radially arranged blades (10, 42).

4. An animal hide cleaner as claimed in claim 3, in which the blade (42) is pivotally mounted on the shaft (41) for limited pivotal movement.

5. An animal hide cleaner as claimed in claim 3 or 4, in which there are four blades (11, 42) substantially equispaced around the shaft (10, 41).

6. An animal hide cleaner as claimed in claim 1 or 2, in which the abrading means (50) is a rotatable shaft (51) carrying flails (53).

7. An animal hide cleaner as claimed in claim 1 or 2, in which the abrading means (20) is a rotatable cylinder (23) formed from alternate abrading surfaces (25) and upstanding bristles (26).

8. An animal hide cleaner as claimed in claim 1 or 2, in which the abrading means (31) comprises a sander carrying an abrading cloth.

9. An animal hide cleaner as claimed in claim 8, in which the abrading means (31) is in the form of a conveyor including:-
a driven head drum (32) projecting proud of the suction mouth (4);
a tail drum (35) mounted within the casing (2); and
a conveyor belt (34) having an outer abrasive surface (35).

10. An animal hide cleaner as claimed in claim 9, in which the outer abrasive surface (35) carries upstanding blades (36).

11. A animal hide cleaner as claimed in claim 9 or 10, in which there is provided a scraper blade (37) within the casing (2) for removal of dirt carried by the conveyor belt (34) into the interior of the casing (2).

12. An animal hide cleaner as claimed in any preceding claim, in which the cleaner (60) includes a suction fan (65).

13. An animal hide cleaner as claimed in any preceding claim, in which the casing (2) is a two part casing connected together by a hinge (68) and catch (69).

## Patentansprüche

1. Ein Tierhautreiniger (1, 30, 60) bestehend aus einer mechanischen Vorrichtung zur Entfernung von Schmutz von der Tierhaut zusammengesetzt aus
• einem geschlossenen Gehäuse (2),
• einer Auslassöffnung (3) zum Anschluss an ein Sauggerät
• einer Ansaugöffnung (4) sowie
• einer Vorrichtung zum Abschleifen der Tierhaut (5, 20, 31, 40 und 50), die im Anschluss an die Ansaugöffnung angebracht ist und den Kontakt zur Tierhaut herstellt und durch das Vorhandensein einer Schneidenabdeckung (16) charakterisiert wird, die quer zur Ansaugöffnung (4) schwenkbar angebracht ist.

2. Ein Tierhautreiniger entsprechend Anspruch 1, bei dem der Reiniger (60) aus einem direkt neben der Ansaugöffnung (4) befindlichen Wasserstrahl besteht, der an eine Wasserquelle angeschlossen werden kann.

3. Ein Tierhautreiniger entsprechend Anspruch 1 oder 2, bei dem die Schleifvorrichtung (5, 40) aus einer drehbaren Welle (10, 41), an der radial angeordnete Schneiden angebracht sind, besteht (10, 42).

4. Ein Tierhautreiniger entsprechend Anspruch 3, bei dem die Schneide (42) schwenkbar an der Welle (41) angebracht ist und so eine begrenzte Drehbewegung der Schneide ermöglicht.

5. Ein Tierhautreiniger entsprechend Anspruch 3 oder 4, bei dem vier Schneiden (11, 42) im Wesentlichen in gleichen Abständen um die Welle herum angeordnet sind (40, 41).

6. Ein Tierhautreiniger entsprechend Anspruch 1 oder 2, bei dem die Schleifvorrichtung (50) aus einer drehbaren Welle (51) mit daran angebrachten Flegeln (53) besteht.

7. Ein Tierhautreiniger entsprechend Anspruch 1 oder 2, bei dem die Schleifvorrichtung (20) aus einem durch wechselweise angeordnete Schleifflächen (25) geformten, drehbaren Zylinder (23) und aus aufrechtstehenden Borsten (26) besteht.

8. Ein Tierhautreiniger entsprechend Anspruch 1 oder 2, bei dem die Schleifvorrichtung (31) aus einem Sandpapierschleifgerät mit Schmirgeltuch besteht.

9. Ein Tierhautreiniger entsprechend Anspruch 8, bei dem die Schleifvorrichtung (31) aus einem sich wie folgt zusammengesetzten Fördersystem besteht:
• einer angetriebenen Kopftrommel (32), die über die Ansaugöffnung (4) herausragt,
• einer innerhalb des Gehäuses (2) angebrachten Endtrommel (35) und
• einem Förderband (34) mit einer aus einer Schleiffläche (35) bestehenden Oberfläche.

10. Ein Tierhaufreiniger entsprechend Anspruch 9, bei dem auf der äußeren Schleiffläche (35) aufrechtstehende Schneiden (36) angebracht sind.

11. Ein Tierhautreiniger entsprechend Anspruch 9 oder 10, bei dem ein Abstreifmesser (37) im Gehäuse (2) zur Entfernung des über das Förderband (34) ins Gehäuseinnere (2) eingebrachten Materials angebracht ist.

12. Ein Tierhautreiniger entsprechend einem der vorhergehend beschriebenen Ansprüche, bei dem der Reiniger (60) mit einem Sauggebläse (65) ausgestattet ist.

13. Ein Tierhautreiniger entsprechend einem der vorhergehend beschriebenen Ansprüche, bei dem es sich bei dem Gehäuse (2) um ein zweiteiliges Gehäuse handelt, dessen Teile mit einem Scharnier (68) und einer Verriegelung (69) miteinander verbunden sind.

## Revendications

1. Un aspirateur de peaux d'animal (1, 30, 60) ayant des dispositifs mécaniques pour enlever la saleté de la peau, comprenant :
- une garniture en carter (2)
- une sortie pour connexion au dispositif aspirant
- un orifice aspirant d'admission (4), et
- un dispositif de ponçage de la peau (5, 20, 31, 40 et 50) attenant à l'orifice d'admission (4) pour le contact avec la peau de l'animal, et comprenant un cache-lame (16), monté sur charnière en travers de l'orifice aspirant d'admission (4).

2. Un aspirateur de peaux d'animal tel que défini dans le point 1, dans lequel l'aspirateur (60) comprend un jet d'eau (61) adjacent à l'orifice aspirant (4) pour connexion à la source d'eau.

3. Un aspirateur de peaux d'animal tel que défini dans les points 1 ou 2, dans lequel le dispositif de ponçage (5, 40) est un arbre orientable (10,41) portant les lames radialement agencées (10, 42).

4. Un aspirateur de peaux d'animal tel que défini dans le point 3, dans lequel la lame (42) est assemblée de façon pivotante sur l'arbre (41) pour un mouvement de rotation limité.

5. Un aspirateur de peaux d'animal tel que défini dans le point 3 ou 4, dans lequel il y a quatre lames (11, 42) équidistantes autour de l'arbre (10,41).

6. Un aspirateur de peaux d'animal tel que défini dans les points 1 ou 2, dans lequel le dispositif de ponçage (50) est un arbre orientable (51) portant des fléaux (53).

7. Un aspirateur de peaux d'animal tel que défini dans les points 1 ou 2, dans lequel le dispositif de ponçage (20) est un cylindre orientable (23) formé à partir de surfaces de ponçage alternées (25) et de poils hérissés (26).

8. Un aspirateur de peaux d'animal tel que défini dans les points 1 ou 2, dans lequel le dispositif de ponçage (31) renferme une ponceuse portant un tissu abrasif.

9. Un aspirateur de peaux d'animal tel que défini dans le point 8 dans lequel le dispositif de ponçage (31) est sous la forme d'un convoyeur comprenant :
- un tambour à tête commandée (32) dépassant l'orifice aspirant (4)
- un tambour arrière (35) monté dans l'enveloppe (2), et
- une bande transporteuse (34) ayant une surface abrasive extérieure (35)

10. Un aspirateur de peaux d'animal tel que défini dans le point 9, dans lequel la surface abrasive extérieure (35) porte les lames droites (36)

11. Un aspirateur de peaux d'animal tel que défini dans les points 9 ou 10, dans lequel une lame de grattoir (37) dans l'enveloppe (2) pour retirer la saleté apportée par la bande transporteuse (34) à l'intérieur de l'enveloppe (2)

12. Un aspirateur de peaux d'animal tel que défini dans l'un des points ci-dessus, dans lequel l'aspirateur renferme un ventilateur d'aspiration (65)

13. Un aspirateur de peaux d'animal tel que défini dans l'un des points ci-dessus, dans lequel l'enveloppe (2) est une enveloppe en deux parties reliées ensemble par une charnière (68) et un loquet (69).
